Europäisches Patentamt

European Patent Office

Office européen des brevets

(11) Publication number: **0 126 759 B1**

(12) **EUROPEAN PATENT SPECIFICATION**

(45) Date of publication of patent specification: **03.10.90**

(21) Application number: **84900082.3**

(22) Date of filing: **02.12.83**

(86) International application number:
**PCT/GB83/00315**

(87) International publication number:
**WO 84/02242 07.06.84 Gazette 84/14**

(51) Int. Cl.⁵: **H 04 N 11/00, H 04 N 7/04, H 04 N 11/08**

(54) **APPARATUS FOR DERIVING SYNCHRONISATION SIGNALS FOR COMPONENT TELEVISION VIDEO SIGNAL RECEPTION.**

(30) Priority: **02.12.82 GB 8234340**
**17.02.83 GB 8304446**
**17.06.83 GB 8316581**

(43) Date of publication of application:
**05.12.84 Bulletin 84/49**

(45) Publication of the grant of the patent:
**03.10.90 Bulletin 90/40**

(84) Designated Contracting States:
**AT BE CH DE FR GB LI LU NL SE**

(56) References cited:

**IEE Proceedings Section AAI, vol. 129, no. 7, part A, September 1982 (Old Woking, Surrey, GB) Windram: "Multiple sound channels in satellite broadcasting", pages 528-531, see page 531, left-hand column, paragraph 5.3**

**IEE Proceedings Section AAI, vol. 129, no. 7, part A, September 1982 (Old Woking, Surre, GB) Robson: "Extende-definition television service", pages 485-492, see the whole document**

(73) Proprietor: **INDEPENDENT BROADCASTING AUTHORITY**
**70 Brompton Road**
**London SW3 1EY (GB)**

(72) Inventor: **HACKETT, Andrew, Denys**
**15 Markan Road Idmiston**
**Salisbury Wiltshire (GB)**

(74) Representative: **Crawford, Andrew Birkby et al**
**A.A. THORNTON & CO. Northumberland House**
**303-306 High Holborn**
**London WC1V 7LE (GB)**

Courier Press, Leamington Spa, England.

**Description**

The present invention relates to a system for transmitting and/or receiving television video signals in component form, which components have been time compressed and placed sequentially so as to occupy, together with the necessary sync and clamping signals, a period substantially identical to the existing line period, e.g. approximately 64 µS.

It has already been proposed to compress the video component signals to such an extent that an audio signal can be included either before or after the video component signal, within the line period. It is preferred that this audio signal takes the form of a digital signal placed before the video components signals. Further, it has been proposed to add to this digital signal a predetermined sequence of digits for use as either a sound or line sync signal.

We now propose that a plurality of predetermined digital sequences be used, each in a different line, from which both line and frame syncs may be derived in a receiving apparatus.

Preferably, there will be just two predetermined sequences which will alternate line by line for the bulk of one frame but one of the sequences will be repeated for a plurality of lines just prior to the end of one frame while the other of the sequences will be repeated for a plurality of lines at the beginning of the next frame. The sequences will then alternate as before.

The present invention provides a method for deriving line and frame frequency synchronisation signals from a received television signal which has a repeated sequence for a plurality of different digital words, each word in a respective one of a plurality of lines, as synchronisation signals comprising the steps:

a) recognising one of the digital words;

b) generating a first signal indicative of recognition of said one of the digital words;

c) recognising at least one further digitial word;

d) generating at least one further signal indicative of recognition of a respective further digital word;

e) operating on the first and further signals to determine the sequence and timing of the first and further signals whereby to generate a signal indicative of synchronisation signal detection; and

f) initiating the generation of receiver sync signals at the line and frame frequency in response to the signal produced as a result of the operating step.

The present invention further provides apparatus for deriving line and frame frequency synchronisation signals from a received television signal which has a repeated sequence of a plurality of different digital words, each word in a respective one of a plurality of lines, as synchronisation signals comprising

means (21) for generating a first signal indicative of recognition of one of the digital words;

means (21) for generating at least one further signal indicative of recognition of a respective further digital word; and

means (22, 23, 24, 25, 27, 28, 30, 31) for operating on the first and further signals to determine the sequence and timing of the first and further signals whereby to generate a signal indicative of synchronisation signal detection for initiating generation of receiver sync signals at the line and frame frequency.

In order that the present invention be more readily understood, reference will now be made to the accompanying drawings, in which:—

Figure 1 shows diagrammatically a multiplexed component signal showing the time division multiplex between the components parts thereof;

Figure 2 shows diagrammatically a frame of C—MAC signals offset by $\frac{1}{2}$ frame and $\frac{1}{2}$ line as well as the multiple timing of each line in the frame.

Figure 3 shows a block diagram of a receiver incorporating the present invention.

Figure 4 shows a state diagram to explain the operation of the circuit shown in Figure 3.

Figure 5 shows a block diagram of a further receiver incorporating the present invention; and

Figure 6A and 6B show state diagrams to explain the operation of the circuit shown in Figure 5.

The Multiplex Analogue Components (MAC) system for whom television signal transmission replaces the colour subcarrier coding of NTSC, PAL and SECAM with a single method of time compression. The conventional studio colour coder is replaced by a MAC coder which separately time compresses each active picture line (52 µs nominally) of luminance (Y) and chrominance (alternate lines contain U and V). By using either charge-coupled devices (ie CCDs) or digital storage, these compressed luminance and chrominance components can be placed in sequence within the 64 µs of each line period. Conventional sync pulses, designed for receiver technology over 30 years ago, are no longer required and are replaced by other synchronisatioon information within the waveform. The colour subcarrier burst is no longer required, and any timing information required for further developments such as extended definition receivers can be derived from the video and sound/data signals.

This time compression results in a proportionate increase in the bandwith required to pass the signal. The extra bandwidth of the time-compressed baseband signal can be accommodated within a satellite FM transmission channel, since the spectral width of the FM signal is a function of both the frequency and amplitude of the baseband signals.

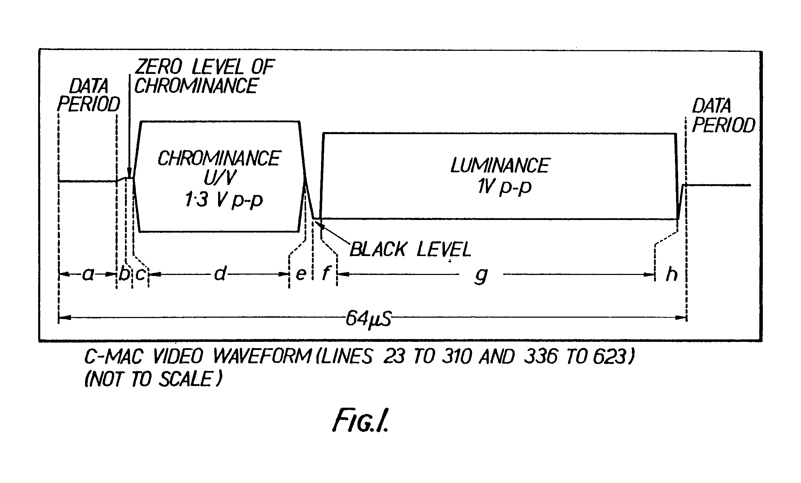

In one version of MAC known as C—MAC, the synchronisation, sound and data signals are digitally modulated onto the carrier in the line-blanking interval of the MAC signal, giving an overall time division multiplex of the RF carrier as shown in Fig. 1. The complete absence of high frequency sub-carriers either for colour or for sound allows the bandwidth of the baseband signals to be increased with the upper limit set by interference constraints. The use of large amounts of pre- and de-emphasis to reduce distortion on subcarriers becomes unnecessary. As a result, the pre- and de-emphasis can be reduced to a level to give optimum noise and interference performance.

Time division multiplexing of the digital synchronisation, sound and data with the analogue video signal is carried out at an intermediate frequency, switching between digital modulation for the synchronisation, sound and data, and frequency modulation from the chrominance and luminance as shown in Figure 1. Such switching is carried out without discontinuity of phase in the main carrier.

The internationally agreed studio standard for component-coded digital video has been established with sampling frequencies 13.5 MHz for luminance and 6.75 MHz for chrominance. Luminance compression of 1.5:1 and chrominance compression 3:1 which are used for C—MAC mean that after compression the effective sampling frequencies for both luminance and chrominance are 20.25 MHz. For convenience of generation and recovery, the same data rate is chosen for the sound signal.

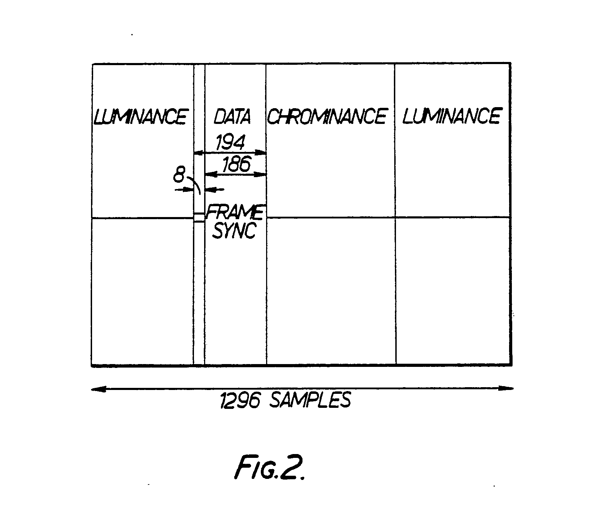

In defining the waveform, it is convenient to divide the 64 µsec video line into 1296 time slots or 'samples' based on integer periods of 49.4 nsec (1/20.25 MHz) which are shown in Fig. 2 which shows the format of a C—MAC signal offset by $\frac{1}{2}$ line and $\frac{1}{2}$ frame.

On this basis, the line is broken into the three component parts of the time division multiplex as shown in Table 1.

TABLE 1

| Number of bits/samples | Total duration | Function |
|---|---|---|
| 8 bits | 0.40 µsec | digital synchronisation |
| 186 bits | 9.18 µsec | digital sound/data |
| 1102 samples | 54.42 µsec | analogue video (MAC) |

Synchronisation
   Synchronisation signals for C—MAC are:
   i) video line sync
   ii) video frame sync
   iii) U/V identification
   iv) Extended-definition synchronisation
   v) Sound synchronisation

i) *Video line sync:* This is available in two ways:
   a) *From the digital burst.* The first 8 bits of the digital burst carry synchronisation information, consisting of a run-in bit for differential detection and seven bits for the synchronising words. There are two

3

EP 0 126 759 B1

line synchronising words $W_1$ and $W_2$ which are sent on alternate lines. Their relative positions are inverted once every frame to provide a frame reference as shown in Table 2 below.

TABLE 2

| Frame Number | Line Number | Sync Word | Frame Number | Line Number | Sync Word |
|---|---|---|---|---|---|
| | 620 | $W_2$ | | 620 | $W_1$ |
| | 621 | $W_1$ | | 621 | $W_2$ |
| | 622 | $W_2$ | | 622 | $W_1$ |
| even | 623 | $W_1$ | odd | 623 | $W_2$ |
| | 624 | $W_2$ | | 624 | $W_1$ |
| | 625 | $W_2$ | | 625 | $W_1$ |
| Frame Boundary | | | | | |
| | 1 | $W_1$ | | 1 | $W_2$ |
| | 2 | $W_1$ | | 2 | $W_2$ |
| | 3 | $W_2$ | | 3 | $W_1$ |
| odd | 4 | $W_1$ | even | 4 | $W_2$ |
| | 5 | $W_2$ | | 5 | $W_1$ |
| | etc | etc | | etc | etc |

The two line sync words are defined as: $W_1 = 1\ 0001101$
$W_2 = 0\ 1110010$

*Signalling bits.* On 20 lines of each frame, the line sync word $W_2$ is replaced with a 7 bit word which may be used for signalling purposes.

These lines are as follows;

*Even frames* — line 26, 58, 74, 90, 152, 182, 198, 216, 276, 308, 324, 340, 400, 432, 458, 466, 526, 558, 574, 590.

*Odd frames* — line 27, 59, 75, 91, 153, 183, 199, 217, 277, 309, 325, 341, 401, 433, 459, 467, 527, 559, 575, 591.

Even and odd frames are defined in Table 2.

b) Line syncs may also be derived by detecting a unique frame sync word placed in line 625 as shown in Fig. 2 and using this to lock an oscillator running at line rate.

ii) *Video frame sync:* This is available in two ways:

a) *From the digital burst.* The first 8 bits of the digital burst provide not only the line syncs, but by inversion of the relative positions of the words once every frame a rugged frame sync is provided as shown in Table 2 above.

b) Alternatively, a distinct and unique frame sync word can be inserted in line 625 as shown in Fig. 2.

iii) *U/V identification.* The U/V identitication is derived directly by line count from the frame sync. The odd lines of the frame carry U information and the even lines carry V information.

iv) *Extended definition synchronisation.* For extended processing which may be introduced in the future, the 20.25 MHz clock required is recovered from the sound data burst.

v) *Sound synchronisation.* Sound synchronisation is obtained by obtaining line and frame synchronisation from the digital burst which then provides total synchronisation of the sound/data channel.

Turning now to the generation of sync signals at the receiver from the C—MAC waveform shown in Fig. 1, it will be recalled that the timings for the MAC receiver are derived from a line-locked 20.25 MHz clock. This has a period of $\approx$49 nS, and there are 1296 clock samples per television line. As timing information for clock regeneration is derived from the data burst, it can be seen that timing information is only present for 15% of the time.

The synchronisation period consists of an 8-bit sequence transmitted at the start of each data burst. Of

4

this the first bit is a run-in bit, and without synchronisation detection can be considered to be of no useful value. The other seven bits contain both the horizontal and vertical sync information in the format shown below.

From Table 2 it will be appreciated that a line sync can be considered to consist of either the word pair $W_1$ $W_2$ or the pair $W_2$ $W_1$.

A frame sync will then consist of the sequences $W_1$ $W_1$ $W_2$ $W_2$ or $W_2$ $W_2$ $W_1$ $W_1$ reversing a $W_1$ $W_2$ pair at the frame boundary.

The choice of words for $W_1$, $W_2$ is governed solely by the desired behaviour of the system under conditions of noise.

Both $W_1$ and $W_2$ should be chosen to have smallest possible correlation with shifted versions of themselves to prevent false lock occurring.

Based on computer search, the seven bit seqeuence 0001101 has been found to be optimum with regard to shifted versions of itself and also simulation of the sequence by video/data and noise.

In order to prevent confusion between $W_1$ and $W_2$ occurring in the receiver, a large Hamming distance between the two is desirable, and hence $W_2$ was chosen to be 1110010.

To keep the average D.C. level to $\frac{1}{2}$, the run in bit was chosen to be 1 for $W_1$ and 0 for $W_2$.

Receiver Sync Detection

Although only seven bits of sync information are sent on each line, the sequence of $W_1$ $W_2$ allows an effective line sync word length of 14 bits and an effective frame sync word length of 28 bits to be used. This is shown below:—

| Line | Sync Word | Line Sync Sequence | Frame Sync Sequence |
|---|---|---|---|
| n | $W_1$ | | |
| n+1 | $W_2$ | $W_1$ $W_2$ | |
| n+2 | $W_1$ | | $W_2$ $W_1$ |
| n+3 | $W_2$ | $W_1$ $W_2$ | |
| n+4 | $W_2$ | | $W_2$ $W_2$* |
| n+5 | $W_1$ | $W_2$ $W_1$† | $W_2$ $W_2$ $W_1$ $W_1$ |
| n+6 | $W_1$ | | $W_1$ $W_1$* |
| n+7 | $W_2$ | $W_1$ $W_2$ | |
| n+8 | $W_1$ | | $W_2$ $W_1$ (or $W_1$ $W_1$ $W_2$ $W_2$) |
| n+9 | $W_2$ | $W_1$ $W_2$ | |

A line sync is therefore present on every line and a frame sync once a frame.

On the lines marked * a line sync is not detected due to the $W_1$ $W_2$ pair inversion to signal a frame sync. The ability of the system to stay in lock is not affected because the line sync detection is inhibited during these two lines once a frame lock is established.

The line marked † contains a valid line sync, but the $W_1$ $W_2$ pair sequence is inverted. This can be used as a less rugged form of frame sync if desired for a simpler receiver and is indicated in Fig. 2.

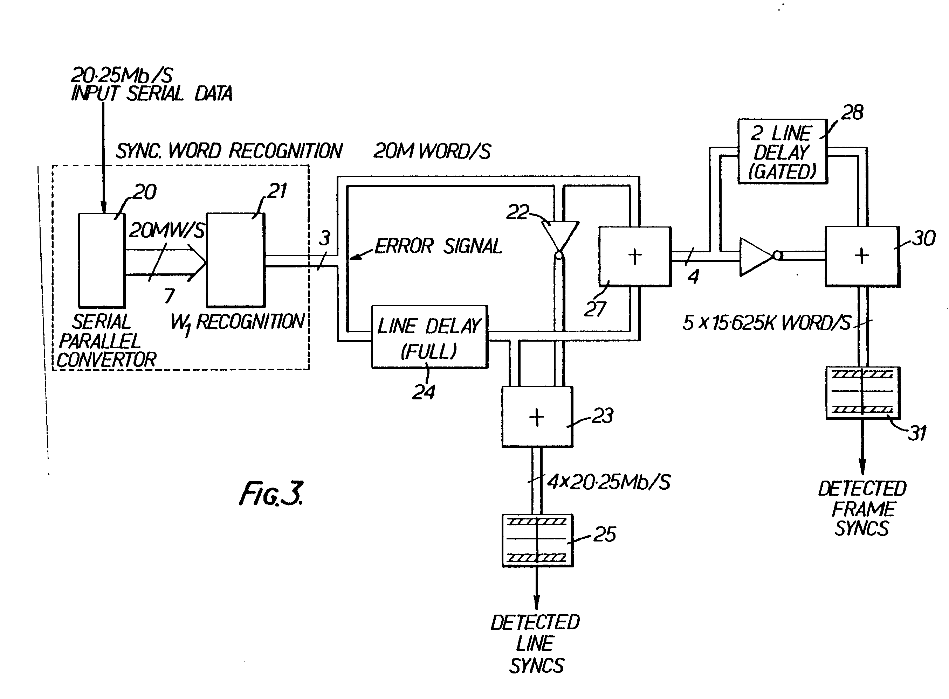

A block diagram of the receiver detector is shown below in Figure 3, and a brief description of the operation follows.

A phase locked loop (not shown) recovers the 20.25 MHz clock from the incoming data stream in a conventional manner. Even when not locked, the oscillator of the phase locked loop is running at a nominal 20.25 MHz and so there is only scale difference in phase between the incoming data stream and the oscillator which results in long period of in phase running of the oscillator in facilitate lock-up.

The input serial data stream is then converted to an n bit wide parallel data stream by a serial to parallel converter 20, where n is the width of the line sync (i.e. n = 7).

This is processed by a sync word recognition circuit 21 which converts the continuous 20 Mb/s data stream to a continuous error pattern. That is, the output represents the number of bits that the input is away from $W_1$. For example, in the case of $W_2$ this is the Hamming distance, or 7.

Line Sync Extraction

Since $^e W_2 = \overline{^e W_2}$, by inverting the present sample and summing this with the same sample from the previous line, a maximum will occur with the line pair $W_1 W_2$ and a minimum with the pair $W_2 W_1$. By comparing these with $^e a_{min}$ and $^e a_{max}$ (the number of errors allowed in a sync word pair before a detection is deemed to be missed) line syncs may be extracted (along with other false detections due to random data) from the input data stream.

The figure $^e l$ may be used as a measure of the BER for the channel.

This operation is achieved by means of an inverter 22 which inverts the present sample and feeds it to one input of an adder 23 whose other input is supplied with the output from a line delay circuit 24. The output of the adder 23 is fed to a comparing circuit 25 where the 4 bit output of the adder 23 is compared with predetermined maximum and minimum numbers of errors and if the level of the output of the adder 23 falls between the maximum and minimum numbers of errors a line sync detection signal is generated.

A frame sync signal could also be extracted from the circuit 25 by detection when minimum and maximum signals are produced.

Frame Sync Extraction

This is preferably performed in a manner similar to line syncs with one important difference. The uninverted present sample is in this case summed with the same sample from the previous line in an adder 27. This gives a minimum for $W_1 W_1$ and a maximum for the sequence $W_2 W_2$. This result is delayed by two lines in a delay circuit 28 which comprises a $2 \times 4$ bit 2 line gated latch and added to the inverted undelayed signal in an adder 30.

Again this result has a minimum for $W_2 W_2 W_1 W_1$ and a maximum for $W_1 W_1 W_2 W_2$. By using a comparison circuit 31 for comparing this result with the number of errors allowable before a detection is not signalled, frame syncs may be detected.

The significant difference between frame sync and line sync extraction is the two line delay circuit 28. This is simply a two element shift register clocked with the regenerated line sync.

Once line lock has been established, the precise horizontal position of the frame sync within one of only 625 possible positions. It is effectively 'pointed to' by the line syncs. Hence the frame sync is made much more robust. This contrasts with a system using a frame sync word only i.e. where the frame sync may be in one of $625 \times 1296$ locations.

Acquisition of Lock

The previous section described in the recovery of the sync pulses. False sync pulses may also be generated by the random data in the channel, or by a particular arrangement of video signals. Therefore some sort of discrimination is required to extract the true syncs from any possible misdetections.

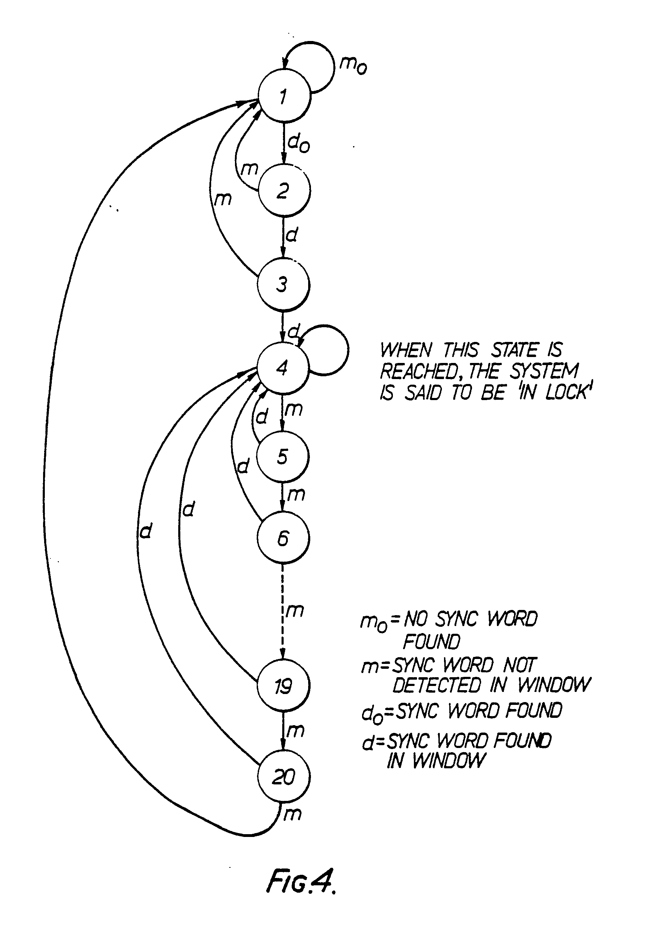

The process by which lock is acquired is governed by the state diagram shown in Fig. 4.

In the initial state any detection of the sync word is accepted, and a counter connected to the output of the comparing circuit 25 is moved to state ②.

If this detection is not the sync word then the counter returns to state ①.

If it is the sync word, the counter progresses to state 4 and the system has acquired lock.

Once line syncs have been acquired, the position of the data burst is known with certainty, and the clock recovery PLL is gated to prevent spurious signals (e.g.g video) outside the burst increasing the amount of jitter on the clock.

After 16 consecutive mis-detections the system reverts to state ① and has lost lock.

The state diagram is the same for line and frame syncs, but acquisition of frame sync is not initiated until line lock is acquired when the position of frame sync can be indicated by line syncs.

The figures in this diagram allow lock to be acquired and held at a C/N of O dB in the UKIBA C—MAC system. This has been confirmed by experimental results.

Sync acquisition is thus by two distinct processes:—

1) Detection of line and frame sync.

2) Lock acquisition and digital flywheeling.

Clock recovery is gated as soon as line lock is established (3 lines) thereby reducing clock jitter at low C/N. The clock has only to run ungated for 3 lines as opposed to running ungated accurately for at least one frame.

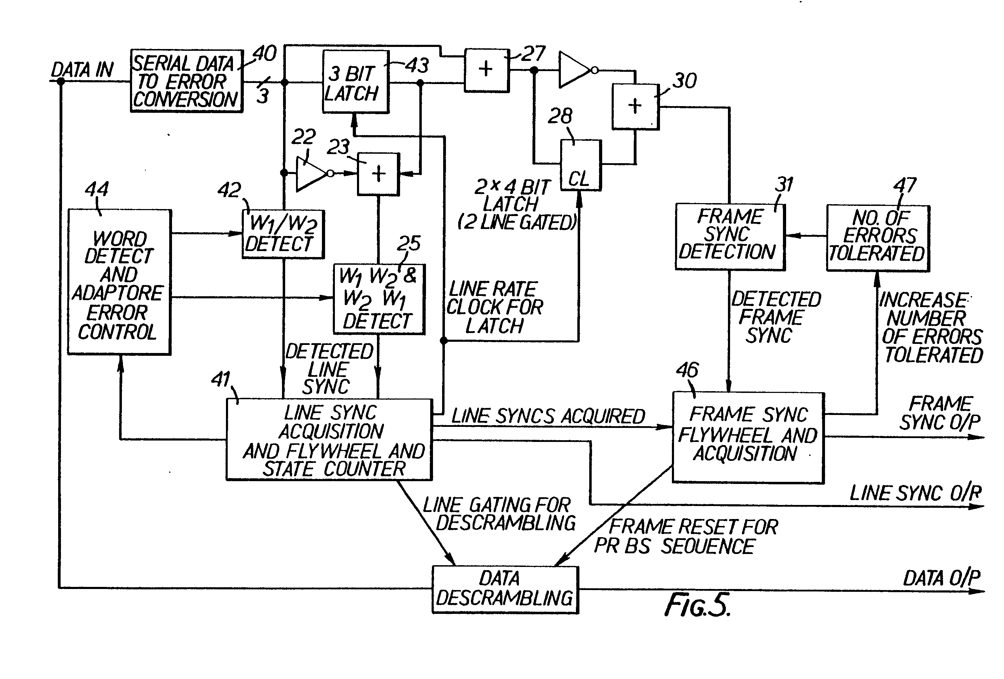

Figure 5 shows a block diagram of a part of a receiver concentrating on sync detection and acquisition which differs from that shown in Fig. 3 in that it is much more simple and easy to instruct.

The previously described receiver required a fairly substantial amount of hardware, mostly running at the 20.25 Mb/s clock rate.

The receiver shown in Figure 5 and described below has a considerably reduced amount of logic running at 20.25 MHz and in particular contains no line store. The same reference numerals are used for the same parts as in Fig. 3.

In Fig. 5, serial incoming data is inverted as before in a circuit 40 to produce a 3-bit error word. A line sync acquisition and flywheel and state counter circuit 41 receives an input from a word detection circuit each time a $W_1$ or $W_2$ word is detected by a word detection circuit 42 connected to the output of the circuit 40. It also receives the line sync detection signal generated by the comparing circuit 25. The counter circuit 41 generates a number of outputs among which is a line rate clock signal which is fed to a 3-bit latch 43 which replaces the line delay circuit 24 of Fig. 3.

The counter circuit 41 also acts as a reference signal generator for generating reference signals for application to a word detector and adaptive error control circuit 44. The reference signal being used to select the type of detection and number of errors tolerated by the detector 42 and the comparing circuit 25.

For frame sync detection, the arrangement is as described in relation to Fig. 3 with the 2 line delay 28 responsive to the line rate clock now generated by the counter circuit 41. Adaptive error control is achieved using a frame sync flywheel and acquisition circuit 46 and an error control circuit 47 which operates in a similar manner to the corresponding circuits described in relation to line sync detector.

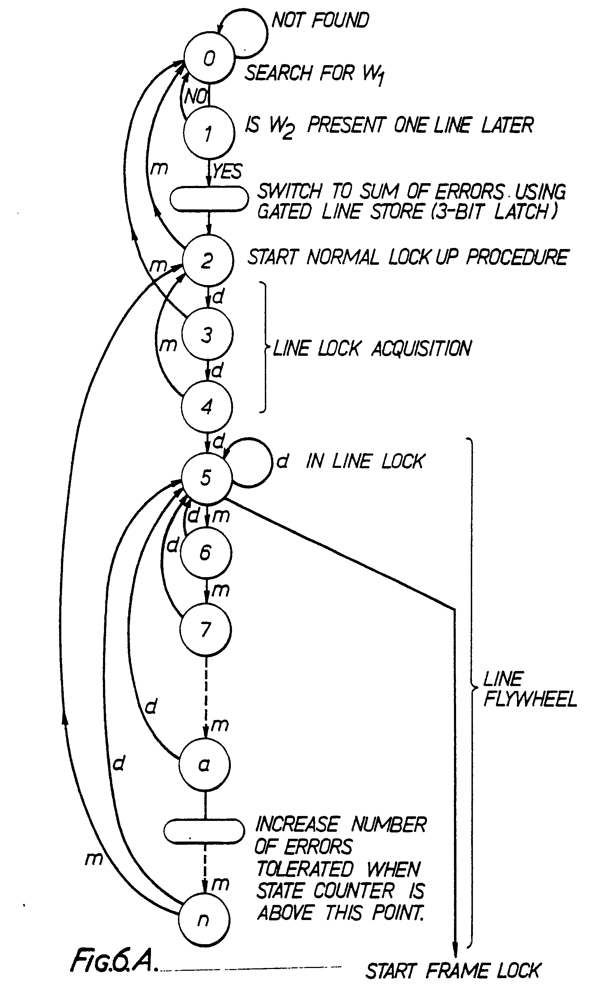

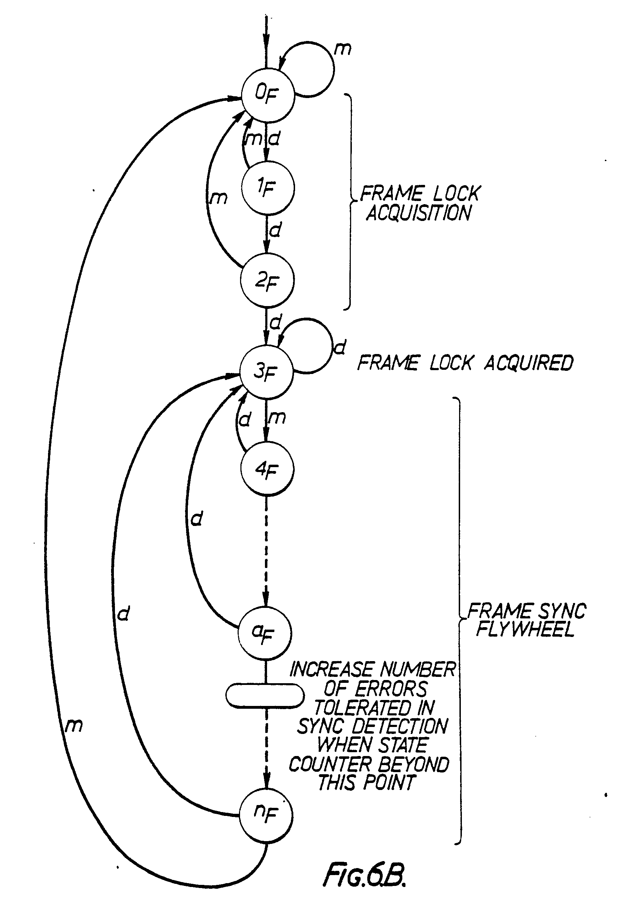

The process of line sync acquisition will now be described with reference to Fig. 5 and Figs. 6A and 6B.

Initially search for $W_1$ (only $W_1$ detections are output from a comparator on the output of the serial to error converter 40, allowing n errors).

If $W_1$ is found, the counter circuit 41 moves to state 1 (Figure 3A) and searches for an occurrence of $W_2$ precisely 1296 clock cycles (1 line) later. This is also output from the word recognition circuit 42 since $W_1 = \overline{W_2}$.

If $W_2$ is not found, the counter circuit 41 reverts to state 0 (Figure 3A) and continues to search for another occurrence of $W_1$.

If $W_2$ is found, then the probability of having found a line sync pair is quite high, and the receiver switches over to the sum of errors mode of the previoous receiver, except that in this case, the line store is replaced by 3-bit latch 43 clocked by the assumed position of line sync found from the separate $W_1$ and $W_2$ detections.

The counter circuit 41 is now at state 2 in (Figure 3A).

If the syncs were correctly identified then the conventional locking procedure will be followed and the counter circuit 41 will sit at state 5 (in Figure 3A) and the receiver will have acquired line lock and a line sync output will be generated by the circuit 41.

At this point, the search for frame lock is initiated and when frame sync is acquired a frame sync output is generated from the circuit 46.

Frame syncs are detected using a 2 latch double line delay as before, and frame lock is also acquired as before.

In both line and frame cases, increasing BER will increase the probability of sync detection being missed and hence the counters 41 and 46 will advance from the in lock state. After a number of counts from these states ($n_I$ and $n_F$) the number of errors tolerated before a sync word detection is missed is increased using the circuits 44 and 47, therefore giving a greater probability of detecting a sync word in the presence of noise. Once a word is detected and the system returns to the in lock state, the number of errors tolerated is reduced to the original level.

Once frame lock is lost, re-acquisition takes place as normal.

Once line lock is lost, instead of reverting to state zero, the counter circuit 41 reverts to state 2.

There are two reasons for loss of line lock — loss of signal, or m consecutive mis-detections due to noise.

In the former case the counter circuit 41 will return to state 0 via state 2.

In the latter case, if sync words are detected there is the possibility of re-acquiring lock whilst still running in the two word mode thereby considerably reducing the interruption to sound and vision caused by loss of lock.

Adaptive error tolerance on either or both line and frame sync detection, allows sync extraction in the presence of a greater amount of noise (or higher BER). The arrangement shown in Fig. 5 has an increased initial lock up time with respect to that of Fig. 3. This is increased by an average of $1\frac{1}{2}$ lines in low BER conditions to approximately 40 lines at a BER of $10^{-1}$.

Although not shown in Figure 3, it will be appreciated that a modified version of the counter circuit 41 in Figure 5 will be used and that adaptive error control of the circuit 25 and/or circuit 31 is possible.

## Claims

1. A method for deriving line and frame frequency synchronisation signals from a received television signal which has a repeated sequence of a plurality of different digital words, each word in a respective one of a plurality of lines, as synchronisation signals comprising the steps:

   a) recognising one of the digital words;

   b) generating a first signal indicative of recognition of said one of the digital words;

   c) recognising at least one further digital word;

   d) generating at least one further signal indicative of recognition of a respective further digital word;

   e) operating on the first and further signals to determine the sequence and timing of the first and further signals whereby to generate a signal indicative of synchronisation signal detection; and

   f) initiating the generation of receiver sync signals at the line and frame frequency in response to the signal produced as a result of the operating step.

2. A method for deriving synchronisation signals according to claim 1, wherein the sequence of plurality of different digital words comprises two different digital words which alternate line by line for a substantial part of one frame of the received television signal, the operating step determines that said two different digital words have been recognised alternating at line frequency in the received television signal whereby a line sync detection signal is generated and the initiating step initiates the generation of receiver sync signals at line frequency in response to the line sync detection signal.

3. A method for deriving synchronisation signals according to claim 1 or 2, wherein the sequence of a plurality of different digital words comprises two different digital words one of the two different digital words being repeated followed by the other digital word repeated the repetition being indicative of the frame boundary, the operating step determines that said repetition has been detected whereby a frame sync detection signal is generated and the initiating step initiates the generation of receiver sync signals at frame frequency in response to the frame sync detection signal.

4. A method for deriving synchronisation signals according to claim 1 or 2, wherein the different digital words in said sequence of a plurality of different digital words are inverted once every frame, the operating step determines that the invention once a frame has been detected whereby a frame sync detection signal is generated and the initiating step initiates the generation of receiver sync signals at frame frequency in response to the frame sync detection signal.

5. A method for deriving synchronisation signals according to claim 3 or 4, and further comprising locking an oscillator running at line frequency in response to the frame sync detection signal whereby to generate receiver sync signals at line frequency.

6. A method for deriving synchronisation signals according to claim 2 or 3, wherein one of the two different digital words is the ones complement of the other of the two different digital words.

7. A method for deriving synchronisation signals according to any previous claim, wherein the second generating step d) generates a plurality of further signals each indicative of recognition of a respective further digital word, and the operating step leads to the generation of a plurality of signals indicative of synchronisation signal detection; and further comprising the steps:

g) setting at least one time window in response to the signals generated as a result of the operating step; and

h) inhibiting the generation of receiver sync signals until a set number of signals indicative of synchronisation signal detection have been generated each occurring in a successive time window.

8. A method for deriving synchronisation signals according to claim 7, and further comprising inhibiting the generation of receiver sync signals when no signals indicative of synchronisation signal detection have occurred in a number of successive time windows.

9. Apparatus for deriving line and frame frequency synchronisation signals from a received television signal which has a repeated sequence of a plurality of different digital words, each word in a respective one of a plurality of lines, as synchronisation signals comprising:

means (21) for generating a first signal indicative of recognition of one of the digital words;

means (21) for generating at least one further signal indicative of recognition of a respective further digital word; and

means (22, 23, 24, 25, 27, 28, 30, 31) for operating on the first and further signals to determine the sequence and timing of the first and further signals whereby to generate a signal indicative of synchronisation signal detection for initiating generation of receiver sync signals at the line and frame frequency.

10. Apparatus for deriving synchronisation signals according to claim 9, wherein the sequence of a plurality of different digital words comprises two different digital words which alternate line by line for a substantial part of one frame of the received television signal, and the means (22, 23, 24, 25, 27, 28, 30, 31) for operating on the first and further signals generates a line sync detection signal for initiating generation of receiver sync signals at line frequency as a result of determining that said two different digital words have been recognised alternating at line frequency in the received television signal.

11. Apparatus for deriving synchronisation signals according to claim 9 or 10, wherein the sequence of a plurality of different digital words comprises two different digital words one of the two different digital words being repeated followed by the other digital word repeated the repetition being indicative of the frame boundary, and the means (22, 23, 24, 25, 27, 28, 30, 31) for operating on the first and further signals generates a frame sync detection signal for initiating generation of receiver sync signals at frame frequency as a result of determining that said repetition has been detected.

12. Apparatus for deriving synchronisation signals according to claim 9 or 10, wherein the different digital words in said sequence of a plurality of different digital words are inverted once every frame, and the means (22, 23, 24, 25, 27, 28, 30, 31) for operating on the first and further signals generates a frame sync detection signal for initiating generation of receiver sync signals at frame frequency as a result of determining that the inversion once a frame has been detected.

13. Apparatus for deriving synchronisation signals according to claim 11 or 12, wherein there is further provided an oscillator running at line frequency and responsive to the frame sync detection signal to generate receiver sync signals at line frequency.

14. Apparatus for deriving synchronisation signals according to claim 10 or 11, wherein there is further provided means (42) for selectively detecting one or other of the two different digital words and control means (44) for selecting which of the different digital words is to be detected.

15. Apparatus for deriving synchronisation signals according to any one of claims 9 to 14, wherein the means for operating on the first and further signals comprises means (22, 23, 24, 27, 28, 30) for adding the first and further signals and comparison means (25, 31) for comparing the output of the adding means with reference values.

16. Apparatus for deriving synchronisation signals according to claim 15, wherein there is further provided means (41, 44, 46, 47) for altering the reference values used by the comparison means (25, 31) whereby to alter the likelihood of the operating means (22, 23, 24, 25, 27, 28, 30, 31) generating a signal indicative of synchronisation signal detection.

17. Apparatus for deriving synchronisation signals according to any one of claims 9 to 16, wherein the means (21) for generating at least one further signal indicative of recognition of a respective further digital word generates a plurality of further signals each indicative of recognition of a respective further digital word, the operating means (22, 23, 24, 25, 27, 28, 30, 31) generates a plurality of signals indicative of synchronisation signal detection and there is further provided lock acquisition means (41, 46) responsive to the signals generated by the operating means to set at least one time window and for inhibiting the generation of receiver sync signals until a set number of signals have been produced by the operating means each occurring in a successive time window.

18. Apparatus for deriving synchronisation signals according to claim 17, wherein the lock acquisition means (41, 46) inhibits generation of receiver sync signals when the operating means has not produced signals during a set number of successive time windows.

**Patentansprüche**

1. Verfahren zum Ableiten von Zeilen- und Rhamenfrequenzsynchronisationssignalen aus einem empfangenen Fernsehsignal, das eine wiederholte Folge einer Mehrzahl von unterschiedlichen Digitalwörtern als Synchronisationssignale enthält, jeweils in Wort in einer entsprechenden aus einer Mehrzahl von Zeilen, enthaltend die Schritte:
   a) Erkennen eines der Digitalwörter;
   b) Erzeugen eines ersten Signals, das die Erkennung des genannten einen der Digitalwörter angibt;
   c) Erkennen wenigstens eines weiteren Digitalwortes;
   d) Erzeugen wenigstens eines weiteren Signals, das die Erkennung von einem entsprechenden weiteren Digitalwort angibt;
   e) Verarbeiten des ersten und des weiteren Signals zur Bestimmung der Folge und der Zeitlage des ersten und des weiteren Signals, um dadurch en Signal zu erzeugen, das die Synchronsignalerkennung anzeigt; und
   f) Auslösen der Erzeugung von Empfängersynchronsignalen bei der Zeilen- und Rahmenfrequenz in Abhängigkeit von dem als Ergebnis des Verarbeitungsschrittes erzeugtren Signal.

2. Verfahren zum Ableiten von Synchronisationssignalen nach Anspruch 1, bei dem die Folge aus einer Mehrzahl von unterschiedlichen Digitalwörtern wenigstens zwei unterschiedliche Digitalwörter enthält, die Zeile für Zeile für einen wesentlichen Teil eines Teilbildrahmens des empfangenen Fernsehsignals abwechseln, der Verarbeitungsschritt bestimmt, daß die zwei genannten unterschiedlichen Digitalwörter alternierend bei Zeilenfrequenz in dem empfangenen Fernsehsignal erkannt worden sind, wodurch ein Zeilensynchronermittelungssignal erzeugt wird und der Auslöseschritt die Erzeugung von Empfängersynchronsignalen bei Zeilenfrequenz in Abhängigkeit von dem Zeilensynchronermittlungssignal auslöst.

3. Verfahren zum Ableiten von Synchronisationssignalen nach Anspruch 1 oder 2, bei dem die Folge aus einer Mehrzahl von unterschiedlichen Digitalwörtern zwei unterschiedliche Digitalwörter enthält, wobei das eine der zwei unterschiedlichen wiederholten Digitalwörter von dem anderen wiederholten Digitalwort gefolgt, wird, wobei die Wiederholung die Rahmengrenzen anzeigt, wobei der Verarbeitungsschritt bestimmt, daß die Wiederholung ermittelt worden ist, wodurch ein Rahmensynchronermittlungssignal erzeugt wird und der Auslöseschritt die Erzeugung von Empfängersynchronsignalen bei Rahmenfrequenz in Abhängigkeit von den Rhamensynchronermittlungssignal auslöst.

4. Verfahren zum Ableiten von Synchronisationssignalen nach Anspruch 1 oder 2, bei dem die unterschiedlichen Digitalwörter in der genannten Folge aus einer Mehrzahl von unterschiedlichen Digitalwörtern für jeden Rhamen einmal invertiert werden, wobei der Verarbeitungsschritt bestimmt, daß die einmalige Invertierung pro Rahmen ermittelt worden ist, wodurch ein Rahmensynchronermittlungssignal erzeugt wird, und wobei der Auslöseschritt die Erzeugung von Empfängersynchronsignalen bei Rahmenfrequenz in Abhängigkeit von dem Rahmensynchronermittlungssignal auslöst.

5. Verfahren zum Ableiten von Synchronisationssignalen nach Anspruch 3 oder 4, und weiterhin enthalend das Verriegeln eines zeilenfrequenzlaufenden Oszilators in Abhängigkeit von dem Rhamensynchronermittlungssignal, um dadurch Empfängersynchronsignale mit Zeilenfrequenz zu erzeugen.

6. Verfahren zum Ableiten von Synchronisationssignalen nach Anspruch 2 oder 3, bei dem eines der zwei unterschiedlichen Digitalwörter das Einserkomplement des anderen der zwei unterschiedlichen Digitalwörter ist.

7. Verfahren zum Ableiten von Synchronisationssignalen nach einem der vorhergehenden Ansprüche, bei dem der zweite Erzeugungsschritt d) eine Mehrzahl von weiteren Signalen erzeugt, die jeweils die Erkennung eines entsprechenden weiteren Digitalworts anzeigen, und bei dem der Verarbeitungsschritt zur

## EP 0 126 759 B1

Erzeugung einer Mehrzahl von Signalen führt, die Synchronisationssignalermittlung anzeigen; und weiterhin enthalend die Schritte:

g) Einstellen wenigstens eines Zeitfensters in Abhängigkeit von den als ein Ergebnis des Verarbeitungsschritts erzeugten Signalen; und

h) Sperren der Erzeugung von Empfängersynchronsignalen, bis eine eingestellte Anzahl von Signalen, die eine Synchronisationssignalermittlung angeben, erzeugt worden sind, die jeweils in einem nachfolgenden Zeitfenster erscheinen.

8. Verfahren zum Ableiten von Synchronisationssignalen nach Anspruch 7, und weiterhin umfassend Sperren der Erzeugung von Empfängersynchronsignalen, wenn keine Signale, die eine Synchronisationssignalermittlung anzeigen, in einer Anzahl von aufeinanderfolgenden Zeitfenstern erschienen sind.

9. Vorrichtung zum Ableiten von Zeilen- und Rahmenfrequenzsynchronisationssignalen aus einem empfangenen Fernsehsignal, das eine wiederholte Folge einer Mehrzahl von unterschiedlichen Digitalwörtern als Synchronisationssignale enthält, jedes Wort, in einer entsprechenden aus einer Vielzahl von Zeilen, enthaltend:

eine Einrichtung (21) zum Erzeugen eines ersten Signals, das die Erkennung von einem der Digitalwörter anzeigt;

eine Einrichtung (21) zum Erzeugen wenigstens eines weiteren Signals, das die Erkennung eines entsprechenden weiteren Digitalworts anzeigt; und

eine Einrichtung (22, 23, 24, 25, 27, 28, 30, 31) zum Verarbeiten des ersten und des weiteren Signals zur Bestimmung der Folge und der Zeitlage des ersten und des weiteren Signals, um dadurch eine Signal zu erzeugen, das die Synchronisationssignalermittlung anzeigt, um die Erzeugung von Empfängersynchronersignalen bei Zeilen- und Rahmenfrequenz auszulösen.

10. Vorrichtung zum Ableiten von Synchronisationssignalen nach Anspruch 9, bei der die Folge der Mehrzahl unterschiedlicher Digitalwörter zwei unterschiedliche Digitalwörter enthält, die Zeile für Zeile für einen wesentlichen Teil eines Rahmens des empfangenen Fernsehsignals abwechseln, und bei der die Einrichtung (22, 23, 24, 25, 27, 28, 30, 31) zum Verarbeiten des ersten und des weiteren Signals ein Zeilensynchronermittlungssignal erzeugt zur Auslösung der Erzeugung von Empfängersynchronsignalen bei Zeilenfrequenz als Ergebnis der Bestimmung, daß die genannten zwei unterschiedlichen Digitalwörter alternierend bei Zeilenfrequenz in dem empfangenen Fernsehsignal erkannt worden sind.

11. Vorrichtung zum Ableiten von Synchronisationssignalen nach Anspruch 9 oder 10, bei der die Folge der Mehrzahl von unterschiedlichen Digitalwörtern zwei unterschiedliche Digitalwörter enthält, wobei eines der zwei unterschiedlichen wiederholten Digitalwörter von dem anderen wiederholten Digitalwort gefolgt wird und die Wiederholung die Rahmengrenze anzeigt und die Einrichtung (22, 23, 24, 25, 27, 28, 30, 31) zum verarbeiten des ersten und des weiteren Signals ein Rahmensynchronermittlungssignal erzeugt, um die Erzeugung von Empfängersynchronsignalen bei Rahmenfrequenz als Folge der Bestimmung, daß die Wiederholung ermittelt worden ist, auszulösen.

12. Vorrichtung zum Ableiten von Synchronisationssignalen nach Anspruch 9 oder 10, bei der die unterschiedlichen Digitalwörter in der genannten Folge aus einer Mehrzahl von unterschiedlichen Digitalwörtern für jeden Rahmen einmal invertiert werden, und die Einrichtung (22, 23, 24, 25, 27, 28, 30, 31) zum Verarbeiten des ersten und des weiteren Signals ein Rahmensynchronermittlungssignal abgibt zur Auslösung der Erzeugung von Empfängersynchronsignalen mit Rahmenfrequenz als Ergebnis der Bestimmung, daß die Invertierung einmal pro Rahmen ermittelt worden ist.

13. Vorrichtung zum Ableiten von Synchronisationssignalen nach Anspruch 11 oder 12, bei der weiterhin ein mit Zeilenfrequenz laufender Oszillator vorgesehen ist, der auf das Rahmensynchronermittlungssignal anspricht, um Empfängersynchronsignale mit Zeilenfrequenz zu erzeugen.

14. Vorrichtung zum Ableiten von Synchronisationssignalen nach Anspruch 10 oder 11, bei der weiterhin vorgesehen sind: eine Einrichtung (42) zum selektiven Ermitteln des einen oder des anderen der zwei unterschiedlichen Digitalwörter und eine Steuereinrichtung (44) zum Auswählen, welches der unterschiedlichen Digitalwörter zu ermitteln ist.

15. Vorrichtung zum Ableiten von Synchronisationssignalen nach einem der Ansprüche 9 bis 14, bei der die Einrichtung zum Verarbeiten des ersten und des weiteren Signals eine Einrichtung (22, 23, 24, 27, 28, 30) zum Addieren des ersten und des weiteren Signals und eine Vergleichseinrichtung (25, 31) zum Vergleichen des Ausgangs der Addiereinrichtung mit Bezugswerten enthält.

16. Vorrichtung zum Ableiten von Synchronisationssignalen nach Anspruch 15, bei der weiterhin eine Einrichtung (41, 44, 46, 47) zum Ändern der von der Vergleichseinrichtung (25, 31) verwendeten Bezugswerte vorgesehen ist, um die Wahrscheinlichkeit, daß die Verarbeitungseinrichtung (22, 23, 24, 25, 27, 28, 30, 31) ein Signal, das die Synchronisationssignalermittlung anzeigt, erzeugt, zu ändern.

17. Vorrichtung zum Ableiten von Synchronisationssignalen nach einem der Ansprüche 9 bis 16, bei der die Einrichtung (21) zum Erzeugen wenigstens eines weiteren Signals, das die Erkennung eines entsprechenden weiteren Digitalworts anzeigt, eine Mehrzahl von weiteren Signalen erzeugt, die jeweils die Erkennung eines entsprechenden weiteren Digitalwortes anzeigen, wobei die Verarbeitungseinrichtung (22, 23, 24, 25, 27, 28, 30, 31) eine Mehrzahl von Signalen erzeugt, die eine Synchronisationssignalermittlung anzeigen, und daß weiterhin eine Verriegelungsannahmeeinrichtung (41, 46) vorgesehen ist, die auf die von der Verarbeitungseinrichtung erzeugten Signale anspricht, um wenigstens ein Zeitfenster einzustellen und um die Erzeugung von Empfängersynchronsignalen zu sperren, bis eine eingestellte

10

Anzahl von Signalen von der Verarbeitungseinrichtung erzeugt worden sind, die jeweils in Einem nachfolgenden Zeitfenster erscheinen.

18. Vorrichtung zum Ableiten von Synchronisationssignalen nach Anspruch 17, bei der die Verriegelungsannahmeeinrichtung (41, 46) die Erzeugung von Empfängersynchronsignalen sperrt, wenn die Verarbeitungseinrichtung keine Signale während einer eingestellten Anzahl von aufeinanderfolgenden Zeitfenstern erzeugt hat.

**Revendications**

1. Procédé pour fournir des signaux de synchronisation de fréquence de ligne et de trame pour un signal de télévision reçu qui comprend une séquence répétée d'une pluralité de mots numériques différents, chaque mot se trouvant dans l'une respective d'une pluralité de lignes, comprenant les étapes consistant à:

a) reconnaître un premier des mots numériques;

b) produire un premier signal indicatif de la reconnaissance dudit premier des mots numériques;

c) reconnaître au moins un autre mot numérique;

d) produire au moins un autre signal indicatif de la reconnaissance d'un resp'ectif autre mot numérique;

e) traiter le premier et l'autre signal pour déterminer la séquence et la temporisation des premier et autre signaux d'où il résulte que l'on produit un signal indicatif de la détection du signal de synchronisation; et

f) initialiser la génération des signaux de synchronisation du récepteur à la fréquence de ligne et de trame en réponse au signal produit par suite de l'étape de traitement.

2. Procédé pour fournir des signaux de synchronisation selon la revendication 1, dans lequel la séquence d'une pluralité de mots numériques différents comprend deux mots numériques différents qui alternent ligne par ligne pendant une partie notable d'une trame du signal de télévision reçu, l'étape de traitement détermine que les deux mots numériques différents ont été reconnus d'une façon qui alterne à la fréquence de ligne dans le signal de télévision reçu d'où il résulte qu'un signal de détection de synchronisation de ligne est produit, et l'étape d'initialisation initialise la génération des signaux de synchronisation du récepteur à la fréquence de ligne en réponse au signal de détection de synchronisation de ligne.

3. Procédé pour fournir des signaux de synchronisation selon l'une des revendications 1 ou 2, dans lequel la séquence d'une pluralité de mots numériques différents comprend deux mots numériques différents, l'une des deux mots numériques différents étant répété et suivi de l'autre mot numérique répété, la répétition étant indicative de la frontière de trame, l'étape de traitement détermine que la répétition a été détectée d'où il résulte qu'un signal de détection de synchronisation de trame est produit, et l'étape d'initialisation initialise la génération des signaux de synchronisation du récepteur à la fréquence de trame en réponse au signal de détection de synchronisation de trame.

4. Procédé pour fournir des signaux de synchronisation selon l'une des revendications 1 ou 2, dans lequel les mots numériques différents dans la séquence d'une pluralité de mots numériques différents sont inversés une fois à chaque trame, l'étape de traitement détermine que l'inversion une fois par trame a été détectée d'où il résulte qu'un signal de détection de synchronisation de trame est produit, et l'étape d'initialisation initialise la génération des signaux de synchronisation du récepteur à la fréquence de trame en réponse au signal de détection de synchronisation de trame.

5. Procédé pour fournir des signaux de synchronisation selon l'une des revendications 3 ou 4, et comprenant en outre le verrouillage d'un oscillateur fonctionnant à la fréquence de ligne en réponse au signal de détection de synchronisation de trame d'où il résulte que l'on produit des signaux de synchronisation du récepteur à la fréquence de ligne.

6. Procédé pour fournir des signaux de synchronisation selon l'une des revendications 2 ou 3, dans lequel l'un des deux mots numériques différents est le complément à 1 de l'autre des deux mots numériques différents.

7. Procédé pour fournir des signaux de synchronisation selon l'une quelconque des revendications précédentes, dans lequel la seconde étape de génération, d), produit une pluralité d'autres signaux dont chacun est indicatif de la reconnaissance d'un autre mot numérique respectif, et l'étape de traitement conduit à la génération d'une pluralité des signaux indicatifs de la détection des signaux de synchronisation; et comprenant en outre les étapes suivantes:

g) déterminer au moins une fenêtre temporelle en réponse aux signaux produits par suite de l'étape de traitement; et

h) inhiber la génération des signaux de synchronisation du récepteur jusqu'à ce qu'un nombre déterminé de signaux indicatifs de la détection du signal de synchronisation ait été produit, chacun apparaissant à l'intérieur d'une fenêtre temporelle successive.

8. Procédé pour fournir des signaux de synchronisation selon la revendication 7, et comprenant en outre l'inhibition de la génération des signaux de synchronisation du récepteur quand aucun signal indicatif de la détection du signal de synchronisation n'a pris place à l'intérieur d'un certain nombre de fenêtres temporelles successives.

9. Appareil pour fournir des signaux de synchronisation de fréquence de ligne et de trame à partir d'un signal de télévision reçu qui présente une séquence répétée d'une pluralité de mots numériques différents, chaque mot étant à l'intérieur de l'une respective d'une pluralité de lignes, en tant que signaux de synchronisation, comprenant:

des moyens (21) pour produire un premier signal indicatif de la reconnaissance d'un premier des mots numériques;

des moyens (21) pour produire au moins un autre signal indicatif de la reconnaissance d'un autre mot numérique respectif, et

des moyens (22, 23, 24, 25, 27, 28, 30, 31) pour traiter le premier et l'autre signal pour déterminer la séquence et la synchronisation du premier et de l'autre signal, d'où il résulte que l'on produit un signal indicatif de la détection des signaux de synchronisation pour initialiser la génération des signaux de synchronisation du récepteur à la fréquence de ligne et de trame.

10. Appareil pour fournir des signaux de synchronisation selon la revendication 9, dans lequel la séquence d'une pluralité de mots numériques différents comprend deux mots numériques différents qui alternent ligne par ligne pendant une partie notable d'une trame du signal de télévision reçu, et les moyens (22, 23, 24, 25, 27, 28, 30, 31) pour traiter les premier et autre signaux produisent un signal de détection de synchronisation de ligne pour initialiser la génération des signaux de synchronisation du récepteur à la fréquence de ligne par suite de la détermination du fait que lesdits deux mots numériques différents ont été reconnus, alternant à la fréquence de ligne dans le signal de télévision reçu.

11. Appareil pour fournir des signaux de synchronisation selon l'une des revendications 9 ou 10, dans lequel la séquence d'une pluralité de mots numériques différents comprend deux mots numériques différents, l'un des deux mots numériques différents étant répété et suivi de l'autre mot numérique répété, la répétition étant indicative de la frontière de trame, et les moyens (22, 23, 24, 25, 27, 28, 30, 31) pour traiter les premier et autre signaux produisent un signal de détection de synchronisation de trame pour initialiser la génération des signaux de synchronisation du récepteur à la fréquence de trame par suite de la détermination du fait que la répétition été détectée.

12. Appareil pour fournir des signaux de synchronisation selon l'une des revendications 9 ou 10, dans lequel les mots numériques différents dans la séquence d'une pluralité de mots numériques différents sont inversés une fois à chaque trame, et les moyens (22, 23, 24, 25, 27, 28, 30, 31) pour traiter les premier et autre signaux produisent un signal de détection de synchronisation de trame pour initialiser la génération des signaux de synchronisation de récepteur à la fréquence de trame par suite de la détermination du fait que l'inversion une fois par trame a été détectée.

13. Appareil pour fournir des signaux de synchronisation selon l'une des revendications 11 ou 12, dans lequel il est en outre prévu un oscillateur fonctionnant à la fréquence de ligne et agissant en réponse au signal de détection de synchronisation de trame pour produire des signaux de synchronisation du récepteur à la fréquence de ligne.

14. Appareil pour fournir des signaux de synchronisation selon l'une des revendications 10 ou 11, dans lequel il est en outre prévu des moyens (42) pour détecter sélectivement l'un ou l'autre des deux mots numériques différents et des moyens de commande (44) pour sélectionner lequel des deux mots numériques différents doit être détecté.

15. Appareil pour fournir des signaux de synchronisation selon l'une quelconque des revendications 9 à 14, dans lequel les moyens pour traiter les premier et autre signaux comprennent de moyens (22, 23, 24, 27, 28, 30) pour ajouter les premier et autre signaux et des moyens de comparaison (25, 31) pour comparer la sortie du moyen d'addition à des valeurs de référence.

16. Appareil pour fournir des signaux de synchronisation selon la revendication 15, dans lequel il est en outre prévu des moyens (41, 44, 46, 47) pour modifier les valeurs de référence utilisées par les moyens de comparaison (25, 31), pour modifier ainsi la probabilité pour que les moyens de traitement (22, 23, 24, 25, 27, 28, 30, 31) produisent un signal indicatif d'une détection de signaux de synchronisation.

17. Appareil pour fournir des signaux de synchronisation selon l'une quelconque des revendications 9 à 16, dans lequel les moyens (21) pour produire au moins un autre signal indicatif de la reconnaissance d'un autre mot numérique respectif produisent une pluralité d'autres signaux dont chacun est indicatif de la reconnaissance d'un autre mot numérique respectif, les moyens de traitement (22, 23, 24, 25, 27, 28, 30, 31) produisent une pluralité de signaux indicatifs de la détection du signal de synchronisation, et il est en outre prévu des moyens d'cquisition de verrouillage (41, 46) agissant en réponse aux signaux produits par le moyen de traitement pour établir au moins un fenêtre temporelle et pour inhiber la génératioon des signaux de synchronisation du récepteur jusqu'à ce qu'un nombre déterminé de signaux ait été produit par le moyen de traitement, chacun des signaux apparaissant dans une fenêtre temporelle successive.

18. Appareil pour fournir des signaux de synchronisation selon la revendication 17, dans lequel les moyens d'acquisition de verrouillage (41, 46) inhibent la génération des signaux de synchronisation du récepteur quand le moyen de traitement n'a pas produit de signaux pendant un nombre déterminé de fenêtres temporelles successives.

DATA PERIOD

ZERO LEVEL OF CHROMINANCE

DATA PERIOD

CHROMINANCE
U/V
1·3 V p-p

LUMINANCE
1V p-p

BLACK LEVEL

a | b|c| d | e | f | g | h

64μS

C-MAC VIDEO WAVEFORM (LINES 23 TO 310 AND 336 TO 623)
(NOT TO SCALE)

FIG.1.

| LUMINANCE | DATA | CHROMINANCE | LUMINANCE |

194
186
8
FRAME
SYNC

1296 SAMPLES

FIG.2.

Fig. 3.

EP 0 126 759 B1

WHEN THIS STATE IS
REACHED, THE SYSTEM
IS SAID TO BE 'IN LOCK'

$m_0$ = NO SYNC WORD
       FOUND

$m$ = SYNC WORD NOT
      DETECTED IN WINDOW

$d_0$ = SYNC WORD FOUND

$d$ = SYNC WORD FOUND
      IN WINDOW

FIG.4.

Fig.5.

DATA IN — SERIAL DATA TO ERROR CONVERSION (40) — 3

WORD DETECT AND ADAPTORE ERROR CONTROL (44)

W1/W2 DETECT (42)

3 BIT LATCH (43)

27 — 22 — 23

W1 W2 & W2 W1 DETECT (25)

DETECTED LINE SYNC

LINE SYNC ACQUISITION AND FLYWHEEL AND STATE COUNTER (41)

2 × 4 BIT LATCH (2 LINE GATED) (28) — CL

LINE RATE CLOCK FOR LATCH

30

FRAME SYNC DETECTION (31)

DETECTED FRAME SYNC

NO. OF ERRORS TOLERATED (47)

INCREASE NUMBER OF ERRORS TOLERATED

FRAME SYNC FLYWHEEL AND ACQUISITION (46)

FRAME SYNC O/P

LINE SYNCS ACQUIRED

LINE SYNC O/R

FRAME RESET FOR PR BS SEQUENCE

LINE GATING FOR DESCRAMBLING

DATA DESCRAMBLING

DATA O/P

5

EP 0 126 759 B1

Fig.6.A.

FRAME LOCK
ACQUISITION

FRAME LOCK ACQUIRED

FRAME SYNC
FLYWHEEL

INCREASE NUMBER
OF ERRORS
TOLERATED IN
SYNC DETECTION
WHEN STATE
COUNTER BEYOND
THIS POINT

Fig.6.B.

7